# EUROPÄISCHE PATENTANMELDUNG

(11) **EP 1 860 014 A2**
(43) Veröffentlichungstag der Anmeldung: **28.11.2007**
(21) Anmeldenummer: 07009107.9
(22) Anmeldetag: 05.05.2007
(51) Int. Cl.: B62B 3/10, B62B 3/16

(54) **Transportvorrichtung für Kisten, Fässer oder dgl.**

(30) Priorität: 24.05.2006 DE 102006024875
(71) Anmelder: Kaiser + Kraft Europa GmbH, 42781 Haan (DE)
(72) Erfinder: Sanders, Thomas, 50825 Köln (DE)
(74) Vertreter: Ostriga, Sonnet, Wirths & Roche

(57) **Zusammenfassung**

Die Erfindung betrifft eine Transportvorrichtung für Kisten, Fässer oder dgl., im Wesentlichen bestehend aus einem Chassis mit mindestens drei Rollen und wenigstens einem entsprechend dimensionierten, eine Vertiefung aufweisenden Aufnahmebereich für Kisten und Fässer.

Die Aufgabe der Erfindung besteht darin, eine neue Transportvorrichtung für Kisten, Fässer oder dgl. zu schaffen, die einen erweiterten Einsatzbereich aufweist.

Die Aufgabe der Erfindung wird gelöst, indem die Transportvorrichtung mit einem zusätzlichen, bodenseitigen Aufnahmebereich versehen ist und das die Rollen außerhalb des Aufnahmebereiches angeordnet sind.

## Beschreibung

Die Erfindung betrifft eine Transportvorrichtung für Kisten, Fässer oder dgl., im Wesentlichen bestehend aus einem Chassis mit mindestens drei Rollen und wenigstens einem entsprechend dimensionierten, eine Vertiefung aufweisenden Aufnahmebereich für Kisten, Fässer od. dgl.

Aus dem druckschriftlich nicht nachweisbaren Stand der Technik ist eine derartige Transportvorrichtung für Fässer allgemein bekannt. Eine solche Transportvorrichtung weist ein rundes Chassis mit einem auf den Durchmesser eines Fasses abgestimmten Aufnahmebereich auf.

Darüber hinaus ist aus der EP 0152323 eine ähnliche Transportvorrichtung für quadratische Kisten oder dgl. offenbart, wobei zusätzlich dargelegt ist, dass das Chassis der Transportvorrichtung ohne die daran montierten Räder zugleich auch als Stapelhilfe einsetzbar ist.

Die Aufgabe der Erfindung besteht nun darin, eine neue Transportvorrichtung für Kisten, Fässer oder dgl. zu schaffen, die einen erweiterten Einsatzbereich aufweist.

Die Lösung der Aufgabe ergibt sich aus den Merkmalen des Anspruchs 1, insbesondere aus den Merkmalen des Kennzeichenteils, wonach die Transportvorrichtung mit einem zusätzlichen, bodenseitigen Aufnahmebereich versehen ist und das die Rollen außerhalb des Aufnahmebereiches angeordnet sind.

Die erfindungsgemäße Vorrichtung hat den wesentlichen Vorteil, dass mit ihr nicht nur der Transport beispielsweise eines Fasses oder einer Kiste möglich ist, sondern dass sie zugleich auch - ohne dass ein Umbau notwendig ist - als Stapelhilfe einsetzbar ist. Dieser erweiterte Einsatzbereich der erfindungsgemäßen Vorrichtung vergrößert den betrieblichen Nutzen einer derartigen Vorrichtung erheblich.

Aus dem deutschen Gebrauchsmuster 7200760 ist zwar ein Transportwagen, insbesondere für Möbelteile bekannt, der im beladenen Zustand auch aufeinander zum Zwecke der Raumersparnis gestapelt werden kann, jedoch handelt es sich dabei um heterogenen, nicht gattungsgemäßen Stand der Technik, da hierbei die Transportwagen keine auf die Abmessungen des Transportgutes abgestimmten Aufnahmebereiche aufweisen.

Erfindungsgemäß können die Aufnahmebereiche der Transportvorrichtung beispielsweise ringförmig zur Aufnahme von Fässern oder quadratisch bzw. rechteckig zur Aufnahme von Kisten ausgebildet sein.

Eine zusätzliche Ausführungsform der Erfindung zeichnet sich dadurch aus, dass jeder Aufnahmebereich für Fässer lediglich aus einem umlaufenden Ring gebildet wird, dessen Innenraum mindestens teilweise mit Widerlagerflächen versehen ist. Mit dieser Art der Konstruktion verringert sich der Materialverbrauch und damit die Kosten der Transportvorrichtung erheblich.

Grundsätzlich ist jedoch auch möglich, dass die Aufnahmebereiche geschlossen ausgebildet sind.

Weitere Vorteile der Erfindung ergeben sich aus der nachfolgenden Beschreibung eines Ausführungsbeispieles. Es zeigen:

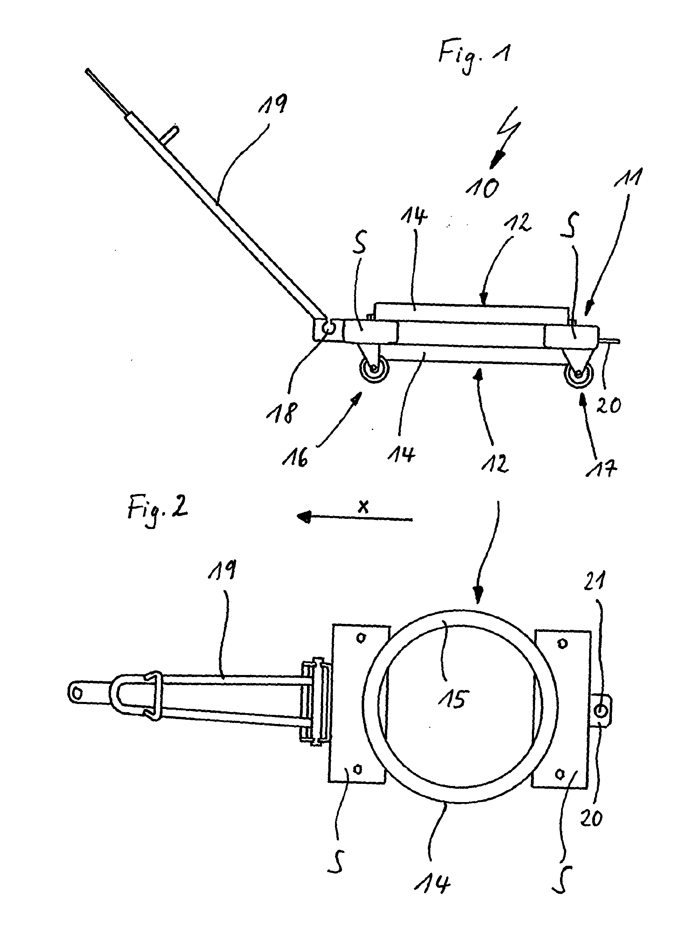

Fig. 1 eine Seitenansicht einer Transportvorrichtung für Kisten, Fässer oder dgl.,
Fig. 2 eine Draufsicht auf eine Transportvorrichtung gemäß Fig. 1 und
Fig. 3 eine Seitenansicht einer Transportvorrichtung gemäß Fig. 1 auch im Einsatz als Stapelhilfe.

In den Zeichnungen ist eine Transportvorrichtung für Kisten, Fässer oder dgl. insgesamt mit der Bezugsziffer 10 bezeichnet.

Eine derartige Transportvorrichtung wird aus einem Chassis 11 gebildet, welches aus quer zur Bewegungsrichtung x angeordneten Staplertasche S gebildet wird. Am Chassis 11 ist darüber hinaus oberhalb und unterhalb jeweils ein Aufnahmebereich 12 für Fässer 13 angeordnet. Der Aufnahmebereich 12 wird durch einen umlaufenden Ring 14 mit einer ebenfalls umlaufenden daran angeordneten ringförmigen Widerlagerfläche 15 gebildet. Auf nicht dargestellte Weise können die Widerlagerflächen beispielsweise auch aus sich kreuzenden Verstrebungen gebildet sein.

Unterhalb des Chassis 11 und außerhalb des bodenseitigen Aufnahmebereiches sind in Bewegungsrichtung x vorne zwei Lenkrollen 16 und hinten zwei Bockrollen 17 angeordnet.

In Bewegungsrichtung x vorne ist die Transportvorrichtung 10 mit einer Befestigungseinrichtung 18 für eine Deichsel 19 versehen. In Bewegungsrichtung hinten ist eine Lasche 20 mit einer Öse 21 am Chassis 11 angeordnet, in die auf nicht dargestellte Weise eine weitere Transportvorrichtung 10 mittels einer Kupplung befestigbar ist.

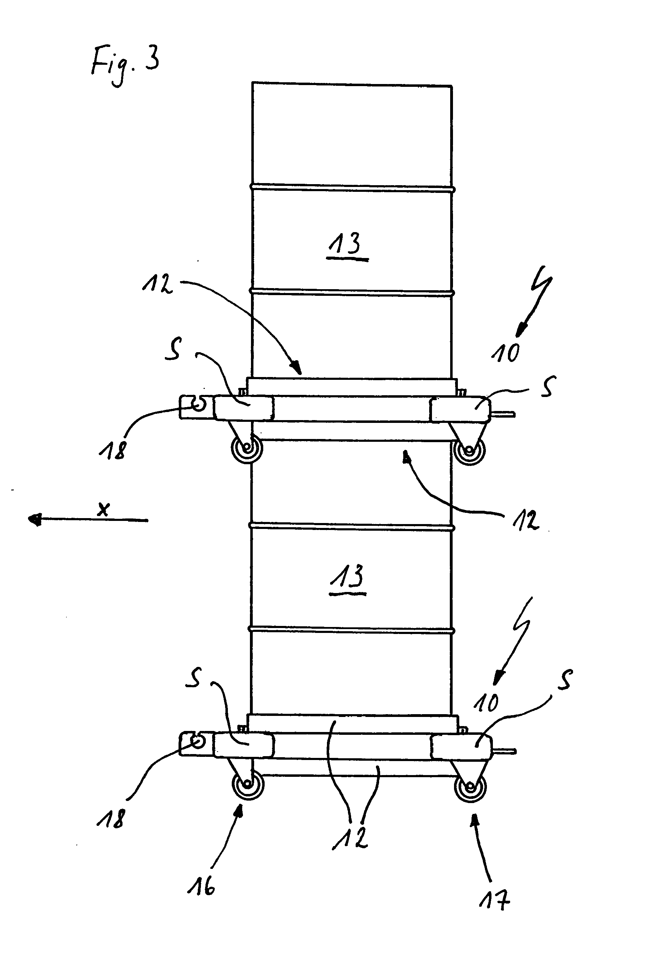

In der Fig. 3 ist erkennbar, wie die Transportvorrichtung 10 einsetzbar ist. Zum einen ist es möglich, diese als reine Transportvorrichtung für ein Fass 13 einzusetzen und zum anderen kann mit Hilfe einer zweiten Transportvorrichtung 10, die als Stapelhilfe eingesetzt wird, ein Fassstapel aus zwei oder mehreren Fässern 13 gleichzeitig transportiert werden.

## Patentansprüche

1. Transportvorrichtung für Kisten, Fässer oder dgl., im Wesentlichen bestehend aus einem Chassis mit mindestens drei Rollen und wenigstens einem entsprechend dimensionierten, eine Vertiefung aufweisenden Aufnahmebereich für Kisten, Fässer oder dgl., **dadurch gekennzeichnet, dass** die Transportvorrichtung (10) mit einem zusätzlichen bodenseitigen Aufnahmebereich (12) versehen ist und dass die Rollen (16, 17) außerhalb des Aufnahmebereiches (12) angeordnet sind.

2. Transportvorrichtung nach Anspruch 1, **dadurch gekennzeichnet, dass** die Aufnahmebereiche (12) ringförmig zur Lagerung und Positionierung von Fässern (13) ausgebildet ist.

3. Transportvorrichtung nach Anspruch 1, **dadurch gekennzeichnet, dass** die Aufnahmebereiche (12) quadratisch bzw. rechteckig zur Lagerung und Positionierung von Kisten ausgebildet.

4. Transportvorrichtung nach Anspruch 1 oder 2, **dadurch gekennzeichnet, dass** jeder Aufnahmebereich (12) für Fässer (13) lediglich aus einem umlaufenden Ring (14) gebildet wird, dessen Innenraum mindestens teilweise mit Widerlagerflächen (15) für ein Fass (13) versehen ist.

5. Transportvorrichtung nach einem der vorangehenden Ansprüche, **dadurch gekennzeichnet, dass** der Boden/Deckel der Aufnahmebereiche (12) geschlossen ausgebildet ist.

6. Transportvorrichtungen nach einem der vorangehenden Ansprüche, **dadurch gekennzeichnet, dass** das Chassis (11) mit Staplertaschen (S) versehen ist.

7. Transportvorrichtung nach einem der vorangehenden Ansprüche, **dadurch gekennzeichnet, dass** das Chassis (11) eine Deichsel (19) aufweist.

8. Transportvorrichtung nach einem der vorangehenden Ansprüche, **dadurch gekennzeichnet, dass** das Chassis (11) eine Anhängeöse (21) aufweist, in die die Kupplung einer weiteren Transportvorrichtung (10) eingreift.

9. Transportvorrichtung nach einem der vorangehenden Ansprüche, dass Deichsel (19) und/oder Kupplung abnehmbar ausgebildet sind.

10. Transportvorrichtung nach einem der vorangehenden Ansprüche, dass das Chassis (11) in Bewegungsrichtung vorne mit Lenkrollen (16) und in Bewegungsrichtung hinten mit Bockrollen (17) versehen ist.
